# EUROPEAN PATENT APPLICATION

(11) **EP 4 700 922 A1**
(43) Date of publication of application: **25.02.2026**
(21) Application number: 25188325.2
(22) Date of filing: 09.07.2025
(51) Int. Cl.: H01M 50/103, H01M 50/531, H01M 50/533, H01M 50/548, H01M 50/553

(54) **BATTERY AND METHOD OF MANUFACTURING BATTERY**

(30) Priority: 20.08.2024 JP 2024139219
(71) Applicant: TOYOTA JIDOSHA KABUSHIKI KAISHA, Toyota-shi, Aichi-ken 471-8571 (JP)
(72) Inventor: KAGAMI, Ryo, Toyota-shi, Aichi-ken, 471-8571 (JP); OSE, Norihiro, Toyota-shi, Aichi-ken, 471-8571 (JP); KAKISHITA, Kenichi, Toyota-shi, Aichi-ken, 471-8571 (JP)
(74) Representative: Winter, Brandl - Partnerschaft mbB

(57) **Abstract**

A battery includes: an electrode body (24) configured by laminating a positive electrode current collector, a negative electrode current collector, a positive electrode foil that extends from the positive electrode current collector, and a negative electrode foil that extends from the negative electrode current collector; a first foil collection portion (34) at which one of the positive electrode foil or the negative electrode foil is collected into one; a second foil collection portion (36) at which another of the positive electrode foil or the negative electrode foil is divided into more than one and collected; a first terminal (33) to which the first foil collection portion is joined; and a second terminal (31) to which the second foil collection portion is joined.

## Description

### BACKGROUND

### Technical Field

The present disclosure relates to a battery.

### Related Art

Japanese Patent Application Laid-Open (JP-A) No. 2015-060823 discloses a battery in which an electrode group (an electrode body) is housed in a battery can (an exterior can). In the battery disclosed in Japanese Patent Application Laid-Open (JP-A) No. 2015-060823, a metal foil exposed portion of one of a positive electrode or a negative electrode has plural current collecting leads, and another metal foil exposed portion has a structure that is continuous with a predetermined width.

However, in the battery disclosed in Japanese Patent Application Laid-Open (JP-A) No. 2015-060823, since plural current collecting leads are individually joined to a terminal, a structure is complicated. On the other hand, although a method of collecting metal foils and joining the metal foils to a terminal is known, in a case in which the number of metal foils is large, it becomes difficult to collect the metal foils, and there is room for improvement in order to increase energy density.

### SUMMARY

In consideration of the above-described circumstances, the present disclosure provides a battery having a simple structure and a high energy density, and a method of manufacturing the battery.

A battery according to a first aspect includes: an electrode body configured by laminating a positive electrode current collector, a negative electrode current collector, a positive electrode foil that extends from the positive electrode current collector, and a negative electrode foil that extends from the negative electrode current collector; a first foil collection portion at which one of the positive electrode foil or the negative electrode foil is collected into one; a second foil collection portion at which another of the positive electrode foil or the negative electrode foil is divided into more than one and collected; a first terminal to which the first foil collection portion is joined; and a second terminal to which the second foil collection portion is joined.

In the battery according to the first aspect, an electrode body is configured by laminating a positive electrode current collector, a negative electrode current collector, a positive electrode foil that extends from the positive electrode current collector, and a negative electrode foil that extends from the negative electrode current collector. Further, one of the positive electrode foil or the negative electrode foil is collected into one as the first foil collection portion, and the first foil collection portion is joined to the first terminal. In this manner, by collecting one of the positive electrode foil or the negative electrode foil into one, a simple structure is obtained as compared to the case in which the positive electrode foil and the negative electrode foil are individually joined to the first terminal.

Further, the other of the positive electrode foil or the negative electrode foil is divided into more than one as the second foil collection portion at which foils are collected, and the second foil collection portion is joined to the second terminal. In this manner, due to the second foil collection portion, which is divided into more than one and at which foils are collected, foils can be collected without reducing the number of foils even when the number of foils is large and cannot be collected into one, such as a case in which the number of foils is different between the positive electrode foil and the negative electrode foil. In other words, energy density can be increased.

A battery according to a second aspect is the battery according to the first aspect, wherein: the first terminal is provided at one end side of the electrode body; and the second terminal is provided at another end side of the electrode body.

In the battery according to the second aspect, by providing the first terminal at the one end side of the electrode body and providing the second terminal at the other end side of the electrode body, it is possible to suppress densification of the first foil collection portion and the second foil collection portion.

A battery according to a third aspect is the battery according to the second aspect, wherein: a distance from another end portion of the electrode body to the second terminal is less than a distance from one end portion of the electrode body to the first terminal.

In the battery according to the third aspect, since the second foil collection portion, which is divided into more than one and collects foils, can be made shorter than the first foil collection portion, by designing the distance at the second foil collection portion side to be short, energy density can be increased.

A battery according to a fourth aspect is the battery according to the first aspect, wherein a number of foils collected at the second foil collection portion is greater than a number of foils collected at the first foil collection portion.

In the battery according to the fourth aspect, by dividing into more than one and collecting foils in the second foil collection portion, at which the number of foils is large, foils can be easily collected and joined.

A battery according to a fifth aspect is the battery according to the first aspect, wherein the first foil collection portion is bent at a vicinity of one corner portion of the electrode body and is joined to the first terminal.

**In** the battery according to the fifth aspect, by bending the first foil collection portion at the vicinity of one corner portion of the electrode body, gas can be made to accumulate in the vicinity of another corner portion of the electrode body when gas is generated. As a result, when the internal pressure of the battery increases, the gas can be leaked from the portion where the gas has accumulated to the outside of the battery.

A battery according to a sixth aspect is the battery according to the fifth aspect, wherein: the first foil collection portion is joined to the first terminal at one location; and the second foil collection portion is joined to the second terminal at plural locations.

**In** the battery according to the sixth aspect, since the first foil collection portion is joined to the first terminal at one location, the non-joined region at the first terminal is larger than that of the second foil collection portion, which is joined at plural locations. As a result, the non-joined region has a fragile structure, and when the internal pressure of the battery increases, gas tends to leak from the first terminal side.

A battery according to a seventh aspect is the battery according to the first aspect, further including: a case that houses the electrode body; a first external terminal that is provided at the case and that is electrically connected to the first terminal; and a second external terminal that is provided at the case and that is electrically connected to the second terminal.

**In** the battery according to the seventh aspect, the first foil collection portion is electrically connected to a first external terminal via the first terminal, and the second foil collection portion is electrically connected to a second external terminal via the second terminal. As a result, the degree of freedom in designing the first external terminal and the second external terminal is improved.

A method of manufacturing a battery according to an eighth aspect is a method of manufacturing a battery that includes an electrode body configured by laminating a positive electrode current collector, a negative electrode current collector, a positive electrode foil that extends from the positive electrode current collector, and a negative electrode foil that extends from the negative electrode current collector, the method including: collecting one of the positive electrode foil or the negative electrode foil into one, and joining the one of the positive electrode foil or the negative electrode foil to a first terminal that is arranged at one end side of the electrode body; and dividing another of the positive electrode foil or the negative electrode foil into more than one and collecting foils, and joining the other of the positive electrode foil or the negative electrode foil to a second terminal that is arranged at another end side of the electrode body.

As described above, according to the battery and the method of manufacturing a battery according to the present disclosure, energy density can be increased with a simple structure.

### BRIEF DESCRIPTION OF THE DRAWINGS

Exemplary embodiments of the present disclosure will be described in detail based on the following figures, wherein:
Fig. 1 is a schematic plan view illustrating the main parts of a vehicle to which a battery according to an exemplary embodiment has been applied;
Fig. 2 is a schematic perspective view of a battery module;
Fig. 3 is a cross-sectional view of a battery cell according to an exemplary embodiment, as viewed from a lamination direction;
Fig. 4 is schematic cross-sectional view of an electrode body in an exemplary embodiment, in which a cross section of the electrode body is drawn schematically;
Fig. 5 is a cross-sectional view illustrating a state in which gas is generated from the state illustrated in Fig. 3;
Fig. 6 is a cross-sectional view illustrating a state in which gas has leaked from the state illustrated in Fig. 5;
Fig. 7 is a cross-sectional view of a battery cell according to a first modified example, as viewed from a lamination direction; and
Fig. 8 is a cross-sectional view of a battery cell according to a second modified example as viewed from a lamination direction.

### DETAILED DESCRIPTION

### Overall Configuration of Vehicle 100

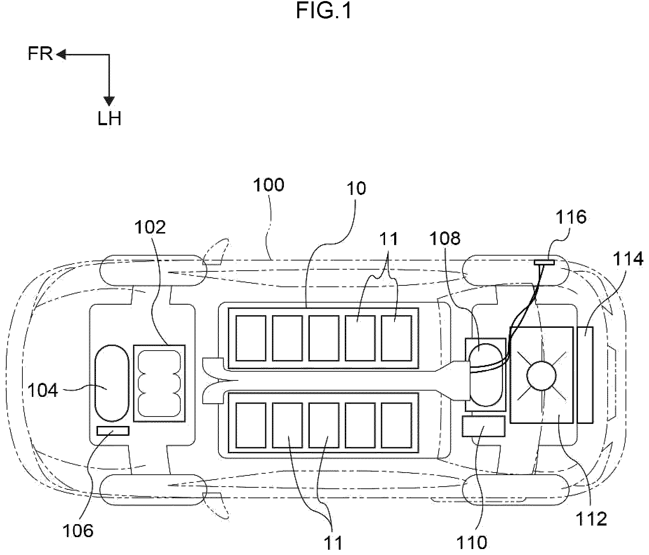

Fig. 1 is a schematic plan view illustrating the main parts of a vehicle 100 to which a battery pack 10 according to the present exemplary embodiment has been applied. As illustrated in Fig. 1, the vehicle 100 is an electric vehicle (battery electric vehicle (BEV)) at which the battery pack 10 has been installed under a floor. It should be noted that in each of the drawings, the arrow UP, the arrow FR, and the arrow LH respectively indicate an upper side in a vehicle up-down direction, a front side in a vehicle front-rear direction, and a left side in a vehicle width direction. In cases in which explanation is given using front-rear, left-right, and up-down directions, unless otherwise specified, these refer to the front and rear in the vehicle front-rear direction, the left and right in the vehicle width direction, and up and down in the vehicle up-down direction.

As an example, in the vehicle 100 of the present exemplary embodiment, a DC/DC converter 102, an electric compressor 104, and a positive temperature coefficient (PTC) heater 106 are arranged further toward a vehicle front side than the battery pack 10. Further, a motor 108, a gear box 110, an inverter 112, and a charger 114 are arranged further toward a vehicle rear side than the battery pack 10.

A DC current that has been output from the battery pack 10 is adjusted in voltage by the DC/DC converter 102, and then is supplied to the electric compressor 104, the PTC heater 106, the inverter 112, and the like. Further, by electric power being supplied to the motor 108 via the inverter 112, the rear wheels rotate to drive the vehicle 100.

A charging port 116 is provided at a right side portion of a rear portion of the vehicle 100, and by connecting a charging plug of an external charging facility, which is not illustrated in the drawings, from the charging port 116, electric power can be stored in the battery pack 10 via the charger 114.

It should be noted that an arrangement, structure and the like of the respective components configuring the vehicle 100 are not limited to the above-described configuration. For example, the present disclosure may be applied to a hybrid vehicle (HV) or a plug-in hybrid vehicle (plug-in hybrid electric vehicle (PHEV)) at which an engine is installed. Further, in the present exemplary embodiment, although the vehicle 100 is configured as a rear-wheel-drive vehicle in which the motor 108 has been installed at a vehicle rear portion, there is no limitation thereto, and the vehicle 100 may be configured as a front-wheel-drive vehicle in which the motor 108 has been installed at a vehicle front portion, and a pair of motors 108 may also be installed at the front and rear of the vehicle 100. Furthermore, the vehicle 100 may also be provided with in-wheel motors at the respective wheels.

The battery pack 10 includes plural battery modules 11. In the present exemplary embodiment, as an example, ten battery modules 11 are provided. Specifically, five battery modules 11 are arranged in the vehicle front-rear direction at the right side of the vehicle 100, and five battery modules 11 are arranged in the vehicle front-rear direction at the left side of the vehicle 100. Further, each of the battery modules 11 is electrically connected to each other.

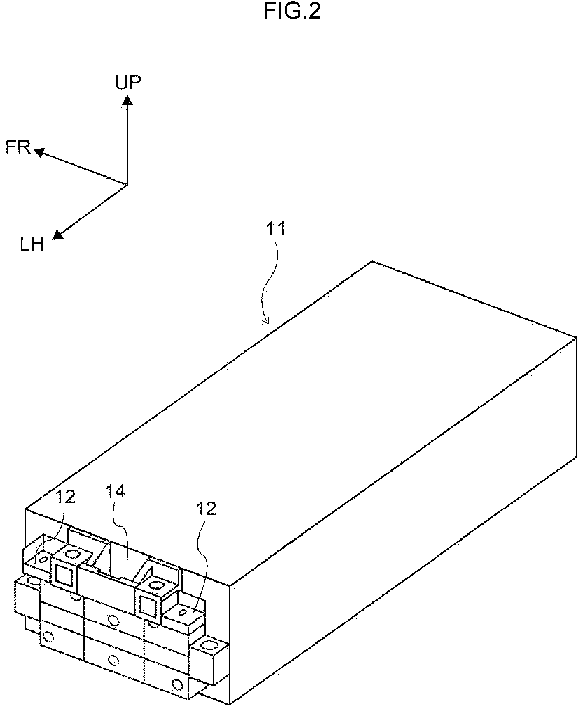

Fig. 2 is a schematic perspective view of the battery module 11. As illustrated in Fig. 2, the battery module 11 is formed in a substantially rectangular parallelepiped shape having a longitudinal direction along the vehicle width direction. Further, a case 13 of the battery module 11 is formed of an aluminum alloy. For example, the case 13 of the battery module 11 is formed by joining aluminum die-casting to both end portions of an extruded material of an aluminum alloy by laser welding or the like.

A pair of voltage terminals 12 and a connector 14 are provided at both vehicle width direction end portions of the battery module 11. Further, bus bars, which are not illustrated in the drawings, are welded to both vehicle width direction end portions of the battery module 11.

Here, battery cells, as plural batteries, are housed at an interior of the battery module 11.

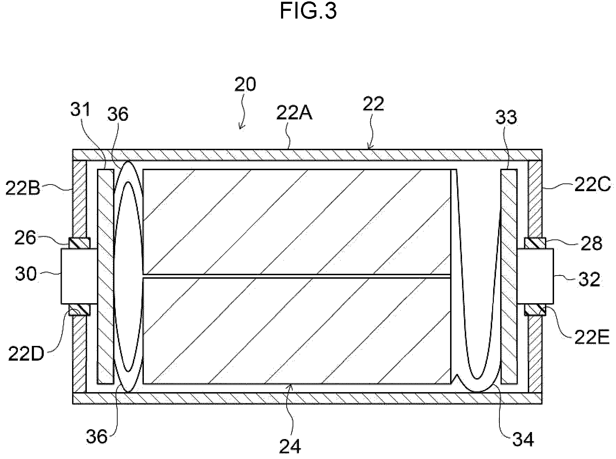

Fig. 3 is a cross-sectional view of a battery cell 20 according to the exemplary embodiment, as viewed from a lamination direction. As illustrated in Fig. 3, the battery cell 20 of the present exemplary embodiment includes an exterior can 22 as a case, and an electrode body 24.

The exterior can 22 configures an outer shell of the battery cell 20 and is formed in a substantially rectangular parallelepiped shape. As an example, the exterior can 22 of the present exemplary embodiment includes a substantially cylindrical peripheral wall portion 22A, a positive-electrode-side lid portion 22B that closes an opening at one side of the peripheral wall portion 22A, and a negative-electrode-side lid portion 22C that closes an opening at another side of the peripheral wall portion 22A.

The peripheral wall portion 22A is formed in a substantially rectangular tubular shape having both ends opened by a metal, and has a size which allows the electrode body 24 to be housed at an interior thereof. The positive-electrode-side lid portion 22B is fitted into the opening at the one side of the peripheral wall portion 22A, and is fixed at the opening at the one side of the peripheral wall portion 22A by welding or other means, and closes the opening at the one side of the peripheral wall portion 22A. Further, an opening 22D is formed in a central part of the positive-electrode-side lid portion 22B, and a substantially frame-shaped positive-electrode-side insulator 26 is provided in the opening 22D.

The negative-electrode-side lid portion 22C is fitted into the opening at the other side of the peripheral wall portion 22A, and is fixed at the opening at the other side of the peripheral wall portion 22A by welding or other means, and closes the opening at the other side of the peripheral wall portion 22A. Further, an opening 22E is formed in a central part of the negative-electrode-side lid portion 22C, and a substantially frame-shaped negative-electrode-side insulator 28 is provided in the opening 22E.

A negative electrode tab 32 is arranged at an inner side of the negative-electrode-side insulator 28 as a first external terminal. Further, a positive electrode tab 30 is arranged at an inner side of the positive-electrode-side insulator 26 as a second external terminal. The negative electrode tab 32 is electrically connected to a first terminal 33 that is housed at an interior of the exterior can 22, and the positive electrode tab 30 is electrically connected to a second terminal 31 that is housed at the interior of the exterior can 22.

The first terminal 33 is formed in a substantially rectangular plate shape having an outer shape that is larger than that of the negative electrode tab 32, and a first foil collection portion 34, which is described below, is joined to the first terminal 33. Further, the second terminal 31 is formed in a substantially rectangular plate shape having an outer shape that is larger than that of the positive electrode tab 30, and a second foil collection portion 36, which is described below, is joined to the second terminal 31.

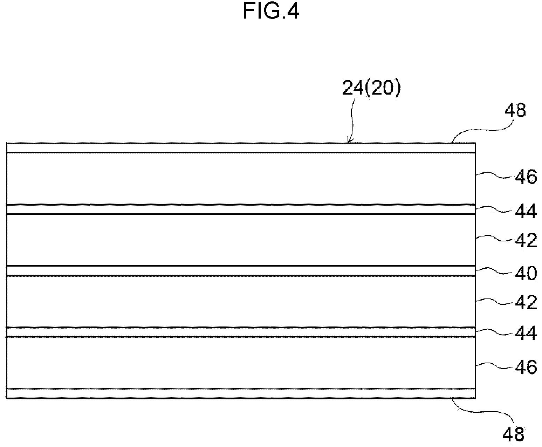

Fig. 4 is schematic cross-sectional view of the electrode body 24 in the exemplary embodiment, in which a cross section of the electrode body 24 is drawn schematically. It should be noted that Fig. 4 schematically illustrates only part of the electrode body 24, and is different from the actual number of layers.

As illustrated in Fig. 4, the electrode body 24 is configured by laminating a negative electrode current collector 40, a negative electrode mixture 42, a solid electrolyte 44, a positive electrode mixture 46, and a positive electrode current collector 48. The negative electrode current collector 40 is arranged at the center in the lamination direction, and is formed of a metal foil, and as the negative electrode current collector 40, a copper foil is preferable.

The negative electrode mixture 42 is applied on both surfaces of the negative electrode current collector 40. As the negative electrode mixture 42, a negative electrode active material, a conductive auxiliary material, a binder, and the like are mixed, and examples of the negative electrode active material include at least one selected from the group consisting of natural graphite, artificial graphite, hard carbon (non-graphitizable carbon) or soft carbon (graphitizable carbon), Si, SiOx (0 < x < 2), Si-based alloys, Sn, SnOx (0 < x < 2), Li, Li-based alloys, and Li₄Ti₅O₁₂. Examples of artificial graphite include highly oriented graphite and mesocarbon microbeads. As the negative electrode active material, artificial graphite is preferable.

The solid electrolyte 44 is laminated on the side of the negative electrode mixture 42 which is opposite to the negative electrode current collector 40. Further, the positive electrode mixture 46 is laminated on the side of the solid electrolyte 44 which is opposite to the negative electrode mixture 42. As the positive electrode mixture 46, a positive electrode active material, a conductive auxiliary material, a binder, and the like are mixed, and the positive electrode mixture 46 is applied to the positive electrode current collector 48. The positive electrode active material is not particularly limited, and conventionally known materials can be appropriately used. For example, examples of the positive electrode active material include LiCoO₂, LiNiO₂, LiMnO₂, LiMn₂O₄, Li(NiCoMn)O₂, Li(NiCoAl)O₂, and LiFePO₄. It should be noted that positive electrode active material particles may be Hi-Nickel (a positive electrode active material having a high Ni ratio), or a Li-Ni-Co-Mn composite oxide or a ternary positive electrode active material.

The positive electrode current collector 48 is formed of a metal foil, and as the positive electrode current collector 48, an aluminum foil is preferable. In this manner, in the electrode body 24 of the present exemplary embodiment, as an example, since the negative electrode current collector 40 is arranged at the center in the lamination direction and a positive electrode current collector 48 is arranged at both sides of the negative electrode current collector 40, the number of positive electrode current collectors 48 is greater than the number of the negative electrode current collector 40.

Here, a positive electrode foil, which is not illustrated in the drawings, extends from an end portion of the positive electrode current collector 48, and a negative electrode foil, which is not illustrated in the drawings, extends from an end portion of the negative electrode current collector 40.

As illustrated in Fig. 3, the first foil collection portion 34, at which the negative electrode foil of the negative electrode current collector 40 is collected into one, is provided at one longitudinal direction end portion of the electrode body 24. The first foil collection portion 34 is bent in the vicinity of one corner portion of the electrode body 24 (the lower right side in Fig. 3) and is joined to the first terminal 33.

On the other hand, the second foil collection portion 36, at which the positive electrode foil of the positive electrode current collector 48 is divided into more than one and collected, is provided at another longitudinal direction end portion of the electrode body 24. As an example, the second foil collection portion 36 of the present exemplary embodiment is divided into two. One second foil collection portion 36 is bent in the vicinity of an upper left corner portion of the electrode body 24 as seen in Fig. 3, and is joined to the second terminal 31. Further, another second foil collection portion 36 is bent in the vicinity of a lower left corner portion of the electrode body 24 as seen in Fig. 3, and is joined to the second terminal 31. For this reason, the first foil collection portion 34 is joined to the first terminal 33 at one location, and the second foil collection portion 36 is joined to the second terminal 31 at plural locations.

Further, since the number of positive electrode current collectors 48 is greater than the number of the negative electrode current collector 40, the number of foils collected at the second foil collection portion 36 is greater than the number of foils collected at the first foil collection portion 34. Specifically, the total number of foils of the divided second foil collection portion 36 is greater than the number of foils of the first foil collection portion 34.

Further, in the present exemplary embodiment, a distance from an end portion of the electrode body 24 at a second terminal 31 side to the second terminal 31 is shorter than a distance from an end portion of the electrode body 24 at a first terminal 33 side to the first terminal 33. Specifically, a space between the electrode body 24 and the second terminal 31 is narrower than a space between the electrode body 24 and the first terminal 33.

The battery cell 20 of the present exemplary embodiment is formed, for example, by collecting the negative electrode foil extending from the negative electrode current collector 40 and joining the negative electrode foil to the first terminal 33, and thereafter, collecting the positive electrode foil extending from the electrode body 24 and joining the positive electrode foil, which is in a state of being divided into two, to the second terminal 31.

### Operation

Next, explanation follows regarding the operation of the battery cell 20 according to the present embodiment.

In the battery cell 20 according to the present exemplary embodiment, as illustrated in Fig. 4, the electrode body 24 is configured by laminating the positive electrode current collector 48, the negative electrode current collector 40, the positive electrode foil extending from the positive electrode current collector 48, and the negative electrode foil extending from the negative electrode current collector 40. Further, as illustrated in Fig. 3, the negative electrode foil is collected into one as the first foil collection portion 34, and the first foil collection portion 34 is joined to the first terminal 33. In this manner, by collecting one negative electrode foil into one, a simple structure is obtained as compared to a case in which plural negative electrode foils are individually joined to the first terminal 33.

Further, the positive electrode foil is divided into more than one as the second foil collection portion 36 at which foils are collected, and the second foil collection portion 36 is joined to the second terminal 31. In this manner, due to the second foil collection portion 36, which is divided into more than one and at which foils are collected, foils can be collected without reducing the number of foils even when the number of foils is large and cannot be collected into one, such as a case in which the number of foils is different between the positive electrode foil and the negative electrode foil. In other words, energy density can be increased.

Further, in the present exemplary embodiment, by providing the first terminal 33 at one end side of the electrode body 24 and providing the second terminal 31 at another end side of the electrode body 24, densification of the first foil collection portion 34 and the second foil collection portion 36 can be suppressed.

Furthermore, in the present exemplary embodiment, since the second foil collection portion 36, which is divided into more than one and collects foils, can be shorter than the first foil collection portion 34, by designing the distance at the second foil collection portion 36 side to be short, the energy density can be increased.

**In** addition, in the present exemplary embodiment, foils can easily be collected and joined by dividing into more than one and collecting foils in the second foil collection portion 36, which has a large number of foils. **In** other words, in a case of collecting the second foil collection portion 36 having a large number of foils into one, since the foil collection portion becomes thick, it becomes difficult to join the foil collection portion and the terminal, whereas by dividing the second foil collection portion 36 into more than one as in the present exemplary embodiment, it becomes easier to collect foils and join.

Further, in the present exemplary embodiment, the first foil collection portion 34 is electrically connected to the negative electrode tab 32 via the first terminal 33, and the second foil collection portion 36 is electrically connected to the positive electrode tab 30 via the second terminal 31. As a result, the degree of freedom in designing the negative electrode tab 32 and the positive electrode tab 30 is improved.

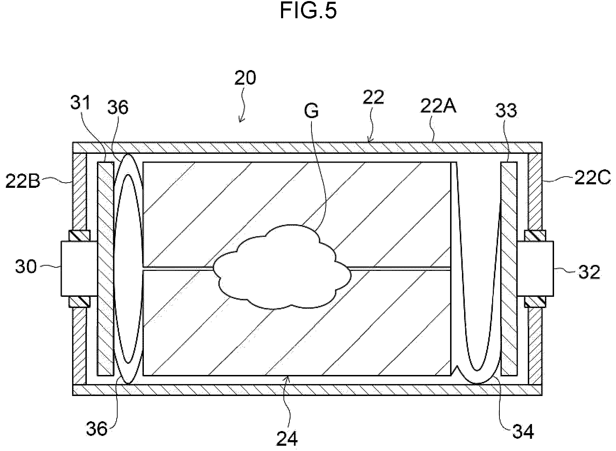

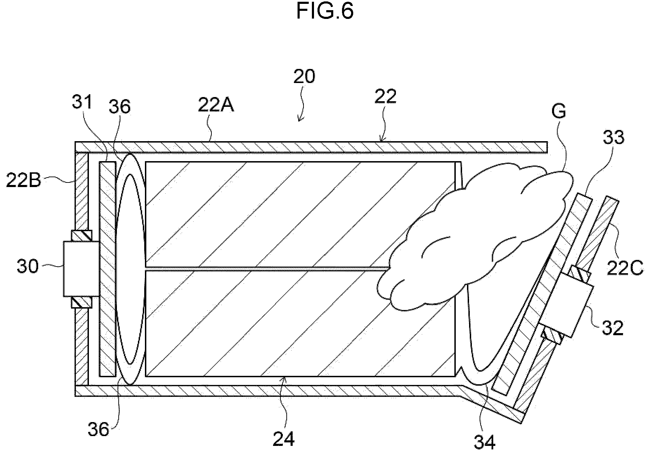

Furthermore, in the present exemplary embodiment, by bending the first foil collection portion 34 in the vicinity of one corner portion of the electrode body 24, gas can be accumulated in the vicinity of another corner portion of the electrode body 24 when gas is generated. As a result, when the internal pressure of the battery increases, the gas can be leaked from the portion where the gas has accumulated to the outside of the battery. This effect will be described with reference to Fig. 5 and Fig. 6.

Fig. 5 is a cross-sectional view illustrating a state in which gas is generated from the state illustrated in Fig. 3, and Fig. 6 is a cross-sectional view illustrating a state in which gas has leaked from the state illustrated in Fig. 5. As illustrated in Fig. 5, a gas G is generated from the electrode body 24 by repeated charging and discharging of the battery cell 20. Further, in the case of abnormality of the battery cell 20, there may be cases in which a large amount of the gas G is generated and the internal pressure of the exterior can 22 increases.

Here, since a gap is provided in the vicinity of a corner portion at the side opposite to the side at which the first foil collection portion 34 is bent, it is easy for the gas G to accumulate at a negative electrode side of the electrode body 24. Further, since the first foil collection portion 34 is joined to the first terminal 33 at one location, the non-joined region at the first terminal 33 is larger than that of the second foil collection portion 36, which is joined at plural locations. As a result, the non-joined region has a fragile structure, and as illustrated in Fig. 6, a corner portion of the exterior can 22 is broken, whereby the gas G can be leaked to the outside of the exterior can 22.

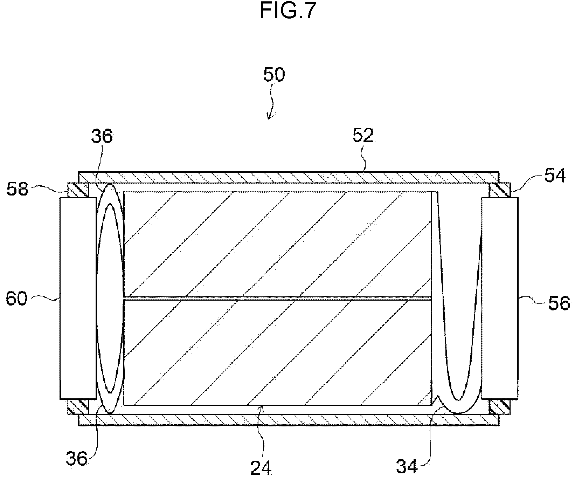

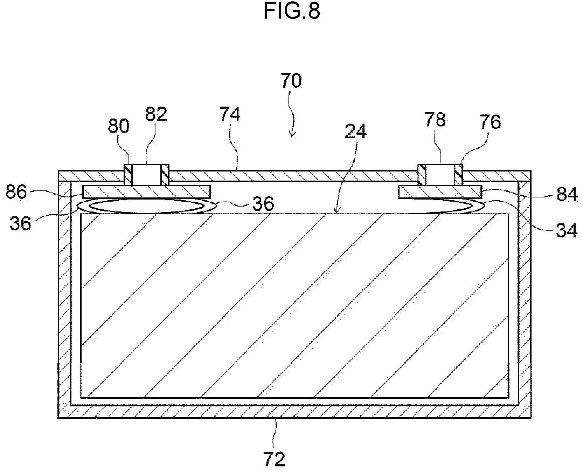

It should be noted that in the above-described exemplary embodiment, as illustrated in Fig. 3, although the negative electrode tab 32 is electrically connected to the first terminal 33 that is housed at the interior of the exterior can 22, and the positive electrode tab 30 is electrically connected to the second terminal 31 that is housed at the interior of the exterior can 22, the present disclosure is not limited thereto. For example, the structure of the first modified example that is illustrated in Fig. 7 may be adopted. Further, in the above-described exemplary embodiment, although the first terminal 33 is provided at one longitudinal direction side of the electrode body 24, and the second terminal 31 is provided at another longitudinal direction side of the electrode body 24, the present disclosure is not limited thereto. For example, the structure of the second modified example that is illustrated in Fig. 8 may be adopted.

### First Modified Example

Fig. 7 is a cross-sectional view of a battery cell 50 according to the first modified example, as viewed from the lamination direction. As illustrated in Fig. 7, the battery cell 50 according to the present modified example includes a case 52. The case 52 is a laminate film that configures an outer shell of the battery cell 50, and the electrode body 24 is housed in the case 52.

An annular insulating member 54 is fixed to one end side of the case 52, and a first terminal 56 is arranged at an inner side of the insulating member 54. Further, an annular insulating member 58 is fixed to another end side of the case 52, and a second terminal 60 is arranged at an inner side of the insulating member 58.

The first foil collection portion 34 of the electrode body 24 is joined to the first terminal 56, and the second foil collection portion 36 is joined to the second terminal 60.

As in the present modified example, the present disclosure can be applied to laminate-type battery cells.

### Second Modified Example

Fig. 8 is a cross-sectional view of a battery cell 70 according to a second modified example, as viewed from the lamination direction. As illustrated in Fig. 8, in the battery cell 70 according to the present modified example, the direction of the terminals is different from the exemplary embodiment. Specifically, the battery cell 70 according to the present modified example includes an exterior can 72. The exterior can 72 configures an outer shell of the battery cell 70, and the electrode body 24 is housed at an interior of the exterior can 72.

The exterior can 72 has a substantially rectangular box shape in which an upper portion is opened, and an opening in the upper portion of the exterior can 72 is closed by a lid member 74. The lid member 74 is formed in a substantially flat plate shape, and two through holes are formed in the lid member 74.

An insulating member 76 and an insulating member 80 are respectively provided in the through-holes of the lid member 74, and a negative electrode tab 78 is fixed to an inner side of the insulating member 76 as a first external terminal. Further, a positive electrode tab 82 is fixed to an inner side of the insulating member 80 as a second external terminal.

A first terminal 84 is fixed to the negative electrode tab 78, and the first foil collection portion 34 is joined to the first terminal 84. Further, a second terminal 86 is fixed to the positive electrode tab 82, and the second foil collection portion 36, which is divided into two, is joined to the second terminal 86.

As in the present modified example, the present disclosure can be applied to a battery cell having an upper terminal structure in which the positive electrode tab 82 and the negative electrode tab 78 are provided on an upper portion thereof.

Although explanation has been given regarding the battery cells 20, 50, and 70 according to the exemplary embodiment and modified examples described above, the present disclosure is not limited thereto, and obviously various embodiments may be implemented within a range not departing from the gist of the present disclosure. For example, in the above-described exemplary embodiment, as illustrated in Fig. 3, although the first foil collection portion 34 collects the negative electrode foil into one, and the second foil collection portion 36 divides the positive electrode foil into more than one and collects foils, the present disclosure is not limited thereto. A configuration in which the negative electrode foil is collected into more than one and the positive electrode foil is collected into one may be adopted.

Further, in the above-described exemplary embodiment, although the second foil collection portion 36 is divided into two and collects foils, the present disclosure is not limited thereto. For example, the second foil collection portion 36 may be divided into three or more and collect foils. In this regard, it is preferable that a larger number of foils be divided and collected.

The following additional notes are disclosed with respect to the above-described embodiments.

### Additional Note 1

A battery includes: an electrode body configured by laminating a positive electrode current collector, a negative electrode current collector, a positive electrode foil that extends from the positive electrode current collector, and a negative electrode foil that extends from the negative electrode current collector; a first foil collection portion at which one of the positive electrode foil or the negative electrode foil is collected into one; a second foil collection portion at which another of the positive electrode foil or the negative electrode foil is divided into more than one and collected; a first terminal to which the first foil collection portion is joined; and a second terminal to which the second foil collection portion is joined.

### Additional Note 2

The battery according to additional note 1, wherein: the first terminal is provided at one end side of the electrode body; and the second terminal is provided at another end side of the electrode body.

### Additional Note 3

The battery according to additional note 2, wherein: a distance from another end portion of the electrode body to the second terminal is less than a distance from one end portion of the electrode body to the first terminal.

### Additional Note 4

The battery according to any one of additional note 1 to additional note 3, wherein a number of foils collected at the second foil collection portion is greater than a number of foils collected at the first foil collection portion.

### Additional Note 5

The battery according to any one of additional note 1 to additional note 4, wherein the first foil collection portion is bent at a vicinity of one corner portion of the electrode body and is joined to the first terminal.

### Additional Note 6

The battery according to according to additional note 5, wherein: the first foil collection portion is joined to the first terminal at one location; and the second foil collection portion is joined to the second terminal at plural locations.

### Additional Note 7

The battery according to any one of additional note 1 to additional note 6, further including: a case that houses the electrode body; a first external terminal that is provided at the case and that is electrically connected to the first terminal; and a second external terminal that is provided at the case and that is electrically connected to the second terminal.

### Additional Note 8

A method of manufacturing a battery that includes an electrode body configured by laminating a positive electrode current collector, a negative electrode current collector, a positive electrode foil that extends from the positive electrode current collector, and a negative electrode foil that extends from the negative electrode current collector, the method including: collecting one of the positive electrode foil or the negative electrode foil into one, and joining the one of the positive electrode foil or the negative electrode foil to a first terminal that is arranged at one end side of the electrode body; and dividing another of the positive electrode foil or the negative electrode foil into more than one and collecting foils, and joining the other of the positive electrode foil or the negative electrode foil to a second terminal that is arranged at another end side of the electrode body.

## Claims

1. A battery (20, 50, 70), comprising:
an electrode body (24) configured by laminating a positive electrode current collector, a negative electrode current collector, a positive electrode foil that extends from the positive electrode current collector, and a negative electrode foil that extends from the negative electrode current collector;
a first foil collection portion (34) at which one of the positive electrode foil or the negative electrode foil is collected into one;
a second foil collection portion (36) at which another of the positive electrode foil or the negative electrode foil is divided into more than one and collected;
a first terminal (33) to which the first foil collection portion is joined; and
a second terminal (31) to which the second foil collection portion is joined.

2. The battery (20, 50, 70) according to claim 1, wherein:
the first terminal (33) is provided at one end side of the electrode body (24); and
the second terminal (31) is provided at another end side of the electrode body (24).

3. The battery (20, 50) according to claim 2, wherein:
a distance from another end portion of the electrode body (24) to the second terminal (31) is less than a distance from one end portion of the electrode body (24) to the first terminal (33).

4. The battery (20, 50, 70) according to claim 1, wherein a number of foils collected at the second foil collection portion (36) is greater than a number of foils collected at the first foil collection portion (34).

5. The battery (20, 50, 70) according to claim 1, wherein the first foil collection portion (34) is bent at a vicinity of one corner portion of the electrode body (24) and is joined to the first terminal (31).

6. The battery (20, 50, 70) according to claim 5, wherein:
the first foil collection portion (34) is joined to the first terminal (33) at one location; and
the second foil collection portion (36) is joined to the second terminal (31) at a plurality of locations.

7. The battery (20, 50, 70) according to claim **1,** further comprising:
a case (22) that houses the electrode body (24);
a first external terminal (32) that is provided at the case and that is electrically connected to the first terminal; and
a second external terminal (30) that is provided at the case and that is electrically connected to the second terminal.

8. A method of manufacturing a battery (20, 50, 70) that comprises an electrode body (24) configured by laminating a positive electrode current collector, a negative electrode current collector, a positive electrode foil that extends from the positive electrode current collector, and a negative electrode foil that extends from the negative electrode current collector, the method comprising:
collecting one of the positive electrode foil or the negative electrode foil into one, and joining the one of the positive electrode foil or the negative electrode foil to a first terminal (33) that is arranged at one end side of the electrode body (24); and
dividing another of the positive electrode foil or the negative electrode foil into more than one and collecting foils, and j oining the other of the positive electrode foil or the negative electrode foil to a second terminal (31) that is arranged at another end side of the electrode body (24).
